(19) Europäisches Patentamt
European Patent Office
Office européen des brevets

(11) **EP 3 346 025 B1**

(12) **EUROPEAN PATENT SPECIFICATION**

(45) Date of publication and mention
of the grant of the patent:
**23.12.2020   Bulletin 2020/52**

(21) Application number: **16841940.6**

(22) Date of filing: **01.09.2016**

(51) Int Cl.:
**C23C 22/07** (2006.01)    **C21D 9/46** (2006.01)
**C23C 22/00** (2006.01)    **C23C 22/12** (2006.01)
**C23C 22/42** (2006.01)    **H01F 1/18** (2006.01)

(86) International application number:
**PCT/JP2016/075596**

(87) International publication number:
**WO 2017/038911 (09.03.2017 Gazette 2017/10)**

(54) **INSULATIVE COATING PROCESSING LIQUID AND METHOD FOR MANUFACTURING METAL HAVING INSULATIVE COATING**

FLÜSSIGKEIT ZUR VERARBEITUNG VON ISOLIERENDER BESCHICHTUNG UND VERFAHREN ZUR HERSTELLUNG EINER ISOLIERENDEN BESCHICHTUNG

LIQUIDE DE TRAITEMENT DE REVÊTEMENT ISOLANT ET PROCÉDÉ DE FABRICATION DE MÉTAL AYANT UN REVÊTEMENT ISOLANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2015   JP 2015173143**

(43) Date of publication of application:
**11.07.2018   Bulletin 2018/28**

(73) Proprietor: **JFE Steel Corporation**
**Tokyo 100-0011 (JP)**

(72) Inventors:
• **TERASHIMA Takashi**
**Tokyo 100-0011 (JP)**
• **SUEHIRO Ryuichi**
**Tokyo 100-0011 (JP)**
• **WATANABE Makoto**
**Tokyo**
**1000011 (JP)**
• **TAKAMIYA Toshito**
**Tokyo 100-0011 (JP)**

(74) Representative: **Grünecker Patent- und Rechtsanwälte**
**PartG mbB**
**Leopoldstraße 4**
**80802 München (DE)**

(56) References cited:
**JP-A- H0 339 484        JP-A- H0 339 484**
**JP-A- H1 171 683        JP-A- H1 171 683**
**JP-A- H08 277 475**

**Description**

TECHNICAL FIELD

The present invention relates to an insulating coating treatment solution and a method of manufacturing metal having an insulating coating.

BACKGROUND ART

In general, a grain oriented electrical steel sheet (hereinafter also referred to simply as "steel sheet") is provided with a coating on its surface to impart an insulating property, workability, corrosion resistance and other properties. Such a surface coating includes an undercoating (forsterite coating) primarily composed of forsterite and formed in final finishing annealing, and a phosphate-based top coating formed on the undercoating.
Of the coatings formed on the surface of the grain oriented electrical steel sheet, only the latter top coating is hereinafter called "insulating coating."
These coatings are formed at high temperature and have a low coefficient of thermal expansion, and therefore serve to exert tension to the steel sheet owing to a difference in a coefficient of thermal expansion between the steel sheet and each coating when the temperature drops to room temperature, thus having an effect of reducing iron loss of the steel sheet. Accordingly, the coatings are required to exert the highest possible tension to the steel sheet.
For example, Patent Literatures 1 and 2 each disclose an insulating coating formed from a treatment solution containing a phosphate and one type of colloidal silica or two or more types of colloidal silicas having different particle diameters. The grain oriented electrical steel sheet with an insulating coating may be hereinafter also simply called "grain oriented electrical steel sheet" or "steel sheet."

CITATION LIST

PATENT LITERATURE

Patent Literature 1: JP 3-39484 A
Patent Literature 2: JP 8-277475 A

SUMMARY OF INVENTION

TECHNICAL PROBLEMS

The present inventors formed each of the insulating films described in Patent Literatures 1 and 2 on a surface of a grain oriented electrical steel sheet having undergone finishing annealing (i.e., a grain oriented electrical steel sheet having a forsterite coating formed thereon) and found out that an iron loss reducing effect is insufficient in some cases.
JP H03 39484 A and JP H11 71683 A disclose solution composition for baking an insulation coating on grain-oriented electrical steels, comprising phosphates and particles of colloidal silica.
Meanwhile, an insulating coating may be applied to metal other than a grain oriented electrical steel sheet having a forsterite coating formed thereon (e.g., a grain oriented electrical steel sheet having no forsterite coating, a non-oriented electrical steel sheet) and, in this case, is expected to exhibit basic physical properties such as an insulating property and an adhesion property; however, the present inventors found out that the insulating films described in Patent Literatures 1 and 2 are sometimes insufficient even in such basic physical properties.
The present invention has been made in view of the above and aims at providing an insulating coating treatment solution that can form an insulating coating exhibiting good physical properties, and a method of manufacturing metal having an insulating coating using the insulating coating treatment solution.
The term "physical properties" herein refers to an iron loss reducing property when an insulating coating is formed on a surface of a grain oriented electrical steel sheet having a forsterite coating formed thereon, and to an insulating property and an adhesion property when an insulating coating is formed on a surface of another type of metal.

SOLUTION TO PROBLEMS

The present inventors have made an intensive study to achieve the above-described object and as a result found that good physical properties can be obtained by blending, at a specific composition, two or more types of colloidal silicas having different mean particle diameters. The present invention has been thus completed.

Specifically, the invention provides the following (1) to (6) .

(1) An insulating coating treatment solution for forming an insulating coating on a surface of metal, comprising: a phosphate of at least one selected from the group consisting of Mg, Ca, Ba, Sr, Zn, Al and Mn; and two or more types of colloidal silicas having different mean particle diameters, wherein a total content of the two or more types of colloidal silicas in terms of $SiO_2$ solid content is 50 to 120 parts by mass with respect to 100 parts by mass of the phosphate in terms of solid content, wherein, when each of mean particle diameters of the two or more types of colloidal silicas is defined as $r_1$, ..., $r_n$ in order of increasing size, a mean particle diameter ratio expressed by $r_{i+1}/r_1$ is not less than : 1.9 and wherein, when each of masses of the two or more types of colloidal silicas in terms of $SiO_2$ solid content is defined as $w_1$, ..., $w_n$ in order of increasing mean particle diameter, a mass ratio expressed by $w_{i+1}/(w_{i+1}+w_i)$ is 0.50 to 0.80 where n represents an integer of at least 2, and i represents an integer of 1 to n-1, and wherein the each of mean particle diameters of the two or more types of colloidal silicas is 1.0 to 150 nm.

(2) The insulating coating treatment solution according to (1) above, wherein, when at least one selected from the group consisting of Ti, V, Cr, Mn, Fe and Zr is denoted by M, the insulating coating treatment solution further comprises an M compound, and wherein a content of the M compound in terms of oxide is 5 to 40 parts by mass with respect to 100 parts by mass of the phosphate.

(3) A method of manufacturing metal having an insulating coating, comprising: applying the insulating coating treatment solution according to (1) or (2) above onto a surface of metal, followed by baking at a temperature of 800°C to 1000°C for 10 to 300 seconds, thereby obtaining metal having an insulating coating.

(4) The method of manufacturing metal having an insulating coating according to (3) above, wherein the metal is a steel sheet.

(5) The method of manufacturing metal having an insulating coating according to (4) above, wherein the steel sheet is an electrical steel sheet.

(6) The method of manufacturing metal having an insulating coating according to (5) above, wherein the electrical steel sheet is a grain oriented electrical steel sheet having undergone finishing annealing.

ADVANTAGEOUS EFFECTS OF INVENTION

The present invention can provide an insulating coating treatment solution that can form an insulating coating exhibiting good physical properties, and a method of manufacturing metal having an insulating coating using the insulating coating treatment solution.

BRIEF DESCRIPTION OF DRAWINGS

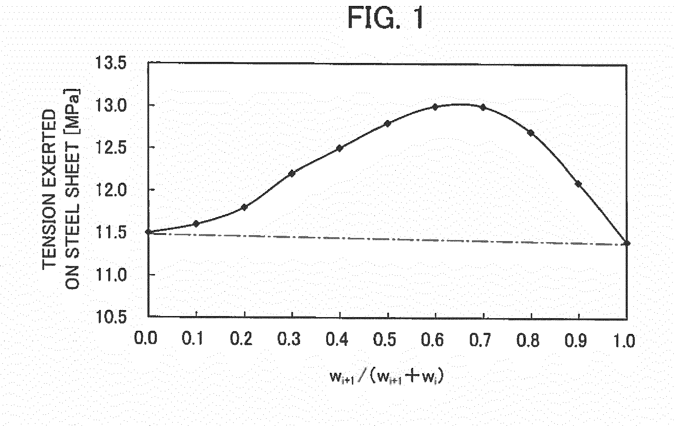

[FIG. 1] FIG. 1 is a graph showing the relationship between the mass ratio ($w_2/(w_2+w_1)$) between separate colloidal silicas having different mean particle diameters in terms of solid content and the tension exerted on a steel sheet ($r_1$: 8.5 nm (AT-300s), $r_2$: 26.1 mm (AT-50)).

DESCRIPTION OF EMBODIMENTS

[Experimental Results]

First of all, experimental results serving as a basis for the present invention are described.

First, samples were produced as follows.

Each grain oriented electrical steel sheet with a sheet thickness of 0.27 mm that had been manufactured by a known method and had undergone finishing annealing was sheared to a size of 300 mm x 100 mm, and an unreacted annealing separator was removed, whereafter stress relief annealing (800°C, 2 hours) was performed.

The resulting steel sheet was slightly pickled with 5% phosphoric acid and then applied with an insulating coating treatment solution (hereinafter also simply called "treatment solution") described below such that the total coating amount on both surfaces after drying became 8.0 $g/m^2$.

The treatment solution was prepared by blending an aqueous solution of magnesium phosphate monobasic in an amount of 100 parts by mass in terms of solid content, separate colloidal silicas having different mean particle diameters in a total amount of 100 parts by mass in terms of solid content, and $CrO_3$ in an amount of 16.7 parts by mass in terms of solid content. At this time, colloidal silica (AT-300s manufactured by ADEKA Corporation, specific gravity: 1.21 g/mL, $SiO_2$: 30.4 mass%, $Na_2O$: 0.53 mass%) with a mean particle diameter of 8.5 nm ($r_1$) and colloidal silica (AT-50 manufactured by ADEKA Corporation, specific gravity: 1.38 g/mL, $SiO_2$: 48.4 mass%, $Na_2O$: 0.25 mass%) with a mean particle diameter of 26.1 nm ($r_2$) were used ($r_2/r_1$ = 3.1) to be mixed such that the mass ratio ($w_2/(w_2+w_1)$) between

the separate colloidal silicas having different mean particle diameters in terms of solid content became the relevant value stated in Table 1 below.

In the above, $w_1$ represents the amount of the colloidal silica with a mean particle diameter of 8.5 nm ($r_1$) in parts by mass, and $w_2$ represents the amount of the colloidal silica with a mean particle diameter of 26.1 nm ($r_2$) in parts by mass, with the both amounts being values in parts by mass (in terms of solid content) based on 100 parts by mass of a phosphate in terms of solid content. Subsequently, the steel sheet having been applied with the treatment solution was put in a drying furnace (300°C, 1 minute) and subjected to heat treatment (800°C, 2 minutes, $N_2$: 100%) which served as flattening annealing and baking of an insulating coating. Thereafter, the steel sheet was further subjected to stress relief annealing (800°C, 2 hours).

The samples thus produced were each evaluated for tension exerted on the relevant steel sheet, an iron loss reducing effect, and water resistance.

The iron loss reducing effect was evaluated with reference to a magnetic property measured with an SST tester (single sheet tester). For each sample, the magnetic property was measured immediately before application of the treatment solution, immediately after baking of an insulating coating and immediately after stress relief annealing (the same applies to Examples described later).

The water resistance was evaluated using a phosphorus dissolution test. In this test, three specimens with a size of 50 mm x 50 mm were cut out from each steel sheet immediately after baking of an insulating coating, the cut specimens were boiled in distilled water at 100°C for 5 minutes to dissolve phosphorus from a surface of the insulating coating, and the dissolution amount [$\mu g/150 \ cm^2$] was used to determine dissolvability of the insulating coating to water. As the phosphorus dissolution amount is smaller, the water resistance can be determined to be better (the same applies to Examples described later).

Table 1 below shows, inter alia, measurement results of tension exerted on a steel sheet, magnetic property, and phosphorus dissolution amount. In addition, the relationship between the mass ratio ($w_2/(w_2+w_1)$) between separate colloidal silicas having different mean particle diameters in terms of solid content and the tension exerted on a steel sheet is shown in FIG. 1.

Details of items in Table 1 below are as follows.

- Exerted tension: Taking the tension in a rolling direction as the exerted tension, it was calculated from deflection of a steel sheet after an insulating coating on either side was peeled with alkali, acid or the like, using Formula (1):

$$\text{Tension exerted on steel sheet [MPa]} = \text{Young's modulus of steel sheet [GPa]} \times \text{Sheet thickness [mm]} \times \text{Deflection [mm]} / (\text{Deflection measurement length [mm]})^2 \times 10^3 \ \text{... Formula (1)}$$

where Young's modulus of a steel sheet was set to 132 GPa.
- $B_8(R)$: Magnetic flux density [T] before application of a treatment solution
- Post-application $\Delta B = B_8(C) - B_8(R)$ ($B_8(C)$: Magnetic flux density [T] after baking of an insulating coating)
- Post-stress relief annealing $\Delta B = B_8(A) - B_8(R)$ ($B_8(A)$: Magnetic flux density [T] after stress relief annealing)
- $W_{17/50}(R)$ : iron loss [W/kg] before application of a treatment solution
- Post-application $\Delta W = W_{17/50}(C) - W_{17/50}(R)$ ($B_{17/50}(C)$: Iron loss [W/kg] after baking of an insulating coating)
- Post-stress relief annealing $\Delta W = W_{17/50}(A) - W_{17/50}(R)$ ($W_{27/50}(A)$: Iron loss [W/kg] after stress relief annealing)
- Phosphorus dissolution amount: Measured after baking of an insulating coating

[Table 1]

Table 1

| Sample No. | Colloidal silica | | w1 [parts by mass] | w2 [parts by mass] | w1+w2 total [parts by mass] | r2/r1 | w2/(w1+w2) | Exerted tension [MPa] | B8(R) [T] | Post-application ΔB [T] | Post-stress relief annealing ΔB [T] | W17/50(R) [W/kg] | Post-application ΔW [W/kg] | Post-stress relief annealing ΔW [W/kg] | Phosphorus dissolution amount [µg/150cm²] |
|---|---|---|---|---|---|---|---|---|---|---|---|---|---|---|---|
| | r1 [nm] | r2 [nm] | | | | | | | | | | | | | |
| 1 | 8.5 | 26.1 | 100 | 0 | 100 | 3.1 | 0.00 | 11.5 | 1.910 | -0.010 | -0.009 | 0.900 | -0.032 | -0.032 | 30 |
| 2 | 8.5 | 26.1 | 90 | 10 | 100 | 3.1 | 0.10 | 11.6 | | -0.010 | -0.009 | | -0.031 | -0.031 | 32 |
| 3 | 8.5 | 26.1 | 80 | 20 | 100 | 3.1 | 0.20 | 11.8 | | -0.010 | -0.009 | | -0.031 | -0.031 | 31 |
| 4 | 8.5 | 26.1 | 70 | 30 | 100 | 3.1 | 0.30 | 12.2 | | -0.010 | -0.009 | | -0.033 | -0.033 | 26 |
| 5 | 8.5 | 26.1 | 60 | 40 | 100 | 3.1 | 0.40 | 12.5 | | -0.010 | -0.009 | | -0.033 | -0.033 | 25 |
| 6 | 8.5 | 26.1 | 50 | 50 | 100 | 3.1 | 0.50 | 12.8 | | -0.010 | -0.009 | | -0.034 | -0.034 | 10 |
| 7 | 8.5 | 26.1 | 40 | 60 | 100 | 3.1 | 0.60 | 13.0 | | -0.010 | -0.009 | | -0.034 | -0.034 | 12 |
| 8 | 8.5 | 26.1 | 30 | 70 | 100 | 3.1 | 0.70 | 13.0 | | -0.010 | -0.009 | | -0.034 | -0.034 | 10 |
| 9 | 8.5 | 26.1 | 20 | 80 | 100 | 3.1 | 0.80 | 12.7 | | -0.010 | -0.009 | | -0.034 | -0.034 | 11 |
| 10 | 8.5 | 26.1 | 10 | 90 | 100 | 3.1 | 0.90 | 12.1 | | -0.010 | -0.009 | | -0.033 | -0.330 | 23 |
| 11 | 8.5 | 26.1 | 0 | 100 | 100 | 3.1 | 1.00 | 11.4 | | -0.010 | -0.009 | | -0.031 | -0.031 | 31 |

$w_1$, $w_2$: Parts by mass (in terms of solid content) with respect to 100 parts by mass of a phosphate in terms of solid content

Only Sample Nos. 6-9 of Table 1 fall under the scope of the claims. As is clear from the results shown in Table 1 above, in cases where separate colloidal silicas having different mean particle diameters were mixed for use (Sample Nos. 2 to 10), every tension exerted on the relevant steel sheet was, at any mass ratio, higher than the simple average of the tensions exerted on the steel sheets in cases where the separate colloidal silicas were not mixed (Sample Nos. 1 and 11).

In particular, the magnetic property and water resistance were excellent at a mass ratio in the range of 0.30 to 0.90 (Sample Nos. 4 to 10), and these properties were further excellent at a mass ratio in the range of 0.50 to 0.80 (Sample Nos. 6 to 9).

The inventors consider the foregoing test results as follows.

The conventional idea is that a phosphate and colloidal silica are reacted and united at baking. In this idea, the particle diameters of the separate colloidal silicas and the mixing ratio therebetween are considered to have nothing to do with the uniting process; however, the foregoing test results show that this is not true. A possible model is not a model in which colloidal silica is fully reacted and united but a model in which colloidal silica particles are dispersed in a phosphate while keeping their shape to some extent. When such a model is assumed, like building a strong stone wall by combining large and small stones, the mean particle diameter ratio and mixing ratio between separate colloidal silicas probably influenced a colloidal silica filling rate, thus changing the physical properties of the resulting insulating coating.

Next, the insulating coating treatment solution according to the invention is described, whereafter the method of manufacturing metal having an insulating coating according to the invention is described.

[Insulating Coating Treatment Solution]

The insulating coating treatment solution of the invention (hereinafter also simply called "treatment solution of the invention") is an insulating coating treatment solution for forming an insulating coating on a surface of metal and, roughly speaking, contains a phosphate of at least one selected from the group consisting of Mg, Ca, Ba, Sr, Zn, Al and Mn, and two or more types of colloidal silicas having different mean particle diameters.

In the treatment solution of the invention, since the colloidal silicas have specific compositions to be described later, the colloidal silica filling rate improves, leading to excellent physical properties of the resulting insulating coating.

More specifically, when the treatment solution is applied to a grain oriented electrical steel sheet having a forsterite coating formed thereon, tension exerted on the steel sheet improves, resulting in an excellent iron loss reducing effect; when the treatment solution is applied to another type of metal, physical properties such as an insulating property and an adhesion property are excellent.

Components contained in the treatment solution of the invention, and the like, are described in detail below.

<Phosphate>

The metal species of the phosphate contained in the treatment solution of the invention is not particularly limited as long as at least one selected from the group consisting of Mg, Ca, Ba, Sr, Zn, Al and Mn is used. Phosphates of alkali metals (e.g., Li and Na) lead to significantly poor water resistance of the resulting insulating coating and are hence inappropriate.

The phosphates may be used singly or in combination of two or more. Physical property values of the resulting insulating coating can be precisely controlled by using two or more types in combination.

A primary phosphate (biphosphate) is advantageously used as such a phosphate from the viewpoint of availability.

<Colloidal Silica>

The treatment solution of the invention contains the mixture of two or more types of colloidal silicas having different mean particle diameters. Each type of colloidal silica before mixed is preferably monodisperse for the purpose of controlling the mixing ratio. The colloidal silicas have preferably a sphere-like shape and more preferably a spherical shape because it is difficult to obtain the effects of the invention with the shapes of a needle, a plate, a cube and the like.

When the Na concentration is high in the colloidal silica liquid, the insulating coating formed on a steel sheet may exert lower tension because of a decreased glass transition temperature and an increased coefficient of thermal expansion. Therefore, the Na concentration with respect to the total mass of the separate colloidal silicas is preferably 1.0 mass% or lower in terms of $Na_2O$.

(Content)

The colloidal silica content of the treatment solution of the invention in terms of $SiO_2$ solid content is 50 to 120 parts by mass, preferably 50 to 100 parts by mass and even more preferably 60 to 100 parts by mass with respect to 100 parts by mass of the phosphate in terms of solid content.

When the colloidal silica content is too low, the insulating coating may be decreased in its effect of reducing a coefficient of thermal expansion and accordingly exert lower tension on the steel sheet. On the other hand, when the colloidal silica content is too high, crystallization of the insulating coating may easily proceed at the time of baking which will be described later, leading to, again, exertion of lower tension on the steel sheet, as well as poor water resistance.

However, when the colloidal silica content is within the foregoing ranges, the insulating coating exerts proper tension on the steel sheet and is highly effective in improving the iron loss. The insulating coating also has excellent water resistance.

(Particle Diameter Ratio)

In the treatment solution of the invention, when the mean particle diameter of colloidal silica is defined as $r_1$, ..., $r_n$ in order of increasing size, the mean particle diameter ratio expressed by $r_{i+1}/r_i$ (hereinafter also simply called "particle diameter ratio") is not less than 1.9 (where n represents an integer of at least 2, and i represents an integer of 1 to n-1) In the above, n is an integer of preferably up to 10 and more preferably up to 5. With a particle diameter ratio of not less than 1.9 the colloidal silica filling rate improves, and becomes further excellent leading to excellent physical properties of the insulating coating.

The upper limit of the particle diameter ratio is not particularly limited; however, when the particle diameter of colloidal silica is extremely small or large, this usually causes a high manufacturing cost and thus the high cost of manufacturing the insulating coating, so that the particle diameter ratio is preferably not more than 50 and more preferably not more than 25 for cost reasons.

(Mass Ratio)

In the treatment solution of the invention, when the mass of colloidal silica in terms of $SiO_2$ solid content is defined as $w_1$, ..., $w_n$ in order of increasing mean particle diameter, the mass ratio expressed by $w_{i+1}/(w_{i+1}+w_i)$ (hereinafter also simply called "mass ratio") is 0.50 to 0.80 (where n represents an integer of at least 2, and i represents an integer of 1 to n-1). In the above, n is an integer of preferably up to 10 and more preferably up to 5.

When the mass ratio is out of the range of 0.50 to 0.80, the amount of colloidal silica with a small or large particle diameter is too large, so that improvement in the colloidal silica filling rate is insufficient; when the mass ratio falls within the range of 0.50 to 0.80, the colloidal silica filling rate improves, leading to excellent physical properties of the insulating coating. Because this effect becomes more excellent, the mass ratio is 0.50 to 0.80.

(Mean Particle Diameter)

The mean particle diameter of colloidal silica refers to the median diameter (diameter at 50%) and is measured by, for instance, laser diffraction or dynamic light scattering.

The mean particle diameters of the separate colloidal silicas are 1.0 to 150 nm and more preferably 4.0 to 100 nm for the purpose of suppressing the cost.

The smallest particle diameter ($r_1$) is preferably 1.0 to 60 nm and more preferably 1.0 to 30 nm from the viewpoint of film formability.

(M Compound)

When at least one selected from the group consisting of Ti, V, Cr, Mn, Fe and Zr is denoted by "M," the treatment solution of the invention may further contain an M compound for the sake of water resistance of the resulting insulating coating (prevention of stickiness that may occur due to moisture absorption).

The M compound content of the treatment solution in terms of oxide is preferably 5 to 40 parts by mass and more preferably 10 to 30 parts by mass with respect to 100 parts by mass of the phosphate. When the M compound content falls within the foregoing ranges, the insulating coating has excellent water resistance and also exerts improved tension on the steel sheet, which leads to a further enhanced effect of improving the iron loss.

The expression "in terms of oxide" used to describe the M compound content is specifically stated for each metal species of M, as follows:

Ti: in terms of $TiO_2$; V: in terms of $V_2O_5$; Cr: in terms of $CrO_3$, Mn: in terms of $MnO$; Fe: in terms of $FeO$; and Zr: in terms of $ZrO_2$.

The form of the M compound when added to the treatment solution of the invention is not particularly limited, and the M compound is preferably contained in the form of a water-soluble compound (metal salt) or an oxide sol for the sake of the stability of the treatment solution.

Examples of the Ti compound include a $TiO_2$ sol, a Ti chelate, and a titanium phosphate sol.

Examples of the V compound include $NH_4VO_3$ and $VOSO_4$.

An exemplary Cr compound is a chromic acid compound, specific examples thereof including chromic anhydride ($CrO_3$), a chromate, and a bichromate.

Examples of the Mn compound include $MnCO_3$, $MnSO_4$, and $Mn(OH)_2$.

Examples of the Fe compound include a FeO(OH) sol.

Examples of the Zr compound include a $ZrO_2$ sol.

The M compounds as above may be used singly or in combination of two or more.

<Inorganic Mineral Particles>

The treatment solution of the invention may further contain inorganic mineral particles such as silica and alumina for the purpose of improving anti-sticking property of the resulting insulating coating.

The inorganic mineral particle content is preferably not more than 1 part by mass with respect to 20 parts by mass of the colloidal silicas in order to prevent the lamination factor from decreasing.

<Manufacture of Treatment Solution, etc.>

The treatment solution of the invention can be manufactured under known conditions and by a known method. For example, the treatment solution of the invention can be manufactured by mixing the foregoing components.

The treatment solution of the invention is applied onto a surface of metal such as a steel sheet, followed by drying, baking and other processes, thereby forming an insulating coating on the surface of the metal.

Metal onto which the treatment solution of the invention is applied to thereby form the insulating coating (a material to be subjected to insulation treatment) is typically a grain oriented electrical steel sheet having undergone finishing annealing (a grain oriented electrical steel sheet having a forsterite coating formed thereon); however, the treatment solution is applicable to other types of metal such as a grain oriented electrical steel sheet having no forsterite coating, a non-oriented electrical steel sheet, a cold-rolled steel sheet, and other general steel sheets.

[Method of Manufacturing Metal Having Insulating Coating]

The method of manufacturing metal having an insulating coating according to the invention is a method of manufacturing metal having an insulating coating involving applying the treatment solution of the invention onto a surface of metal, followed by baking at a temperature of 800°C to 1000°C for 10 to 300 seconds, thereby obtaining metal having an insulating coating.

<Metal>

Metal onto which the treatment solution of the invention is applied (a material to be subjected to insulation treatment) is for example a steel sheet as described above, and specific examples thereof include a grain oriented electrical steel sheet having undergone finishing annealing (a grain oriented electrical steel sheet having a forsterite coating formed thereon), a grain oriented electrical steel sheet having no forsterite coating, a non-oriented electrical steel sheet, and a cold-rolled steel sheet. Of these, the electrical steel sheets are preferred, and the grain oriented electrical steel sheets are more preferred.

The grain oriented electrical steel sheet is not particularly limited, and a conventionally known grain oriented electrical steel sheet may be used. A grain oriented electrical steel sheet is usually manufactured by hot-rolling a silicon-containing steel slab through a known method, performing one cold rolling step or a plurality of cold rolling steps including intermediate annealing to finish the steel slab to a final thickness, thereafter performing primary recrystallization annealing, then applying an annealing separator, and finally performing final finishing annealing. Thus the grain oriented electrical steel sheet having a forsterite coating formed thereon is obtained.

When the forsterite coating is removed by, for instance, pickling after the final finishing annealing, the grain oriented electrical steel sheet having no forsterite coating can be obtained.

<Application of Treatment Solution>

A method of applying the treatment solution of the invention is not particularly limited and any known method may be used.

When metal to be applied with the treatment solution of the invention is in a plate shape, the treatment solution of the invention is preferably applied to both surfaces of the metal and more preferably applied so that the total coating amount on both the surfaces after baking (when drying to be described later is carried out, after drying and baking) becomes 4 to 15 g/m$^2$. The interlaminar insulation resistance may decrease when the coating amount is too small, whereas the lamination factor may decrease when the coating amount is too large.

<Drying>

Next, the metal having been applied with the treatment solution of the invention is preferably dried. To be more specific, for example, the metal having been applied with the treatment solution is placed in a drying furnace and dried at a temperature of 150°C to 450°C for 0.25 seconds to 2 minutes; however, the drying method is not limited thereto.

<Baking>

Next, the metal having been applied with the treatment solution of the invention and then optionally dried is baked, thereby forming an insulating coating.
In this process, baking is preferably carried out at a temperature of 800°C to 1000°C for 10 to 300 seconds because this process doubles as flattening annealing. When the baking temperature is too low or the baking time is too short, this causes insufficient flattening, which may lead to a shape defect and thus a lower yield, while when the baking temperature is too high, flattening annealing imparts too strong effect, which may cause creep deformation and higher possibility of deterioration in the magnetic property. As long as baking is carried out under the foregoing conditions, the effect of flattening annealing is sufficiently and adequately exhibited.

EXAMPLES

The present invention is specifically described below by way of examples. However, the present invention should not be construed as being limited to the following examples.

[Experimental Example 1]

A grain oriented electrical steel sheet with a sheet thickness of 0.27 mm (magnetic flux density B$_8$: 1.912 T) that had undergone finishing annealing was prepared. The grain oriented electrical steel sheet was cut into a size of 100 mm x 300 mm and pickled with 5 mass% phosphoric acid. Thereafter, an insulating coating treatment solution prepared at the composition shown in Table 2 below was applied so that the total coating amount on both surfaces after drying and baking became 10 g/m$^2$. Subsequently, the resulting steel sheet was placed in a drying furnace and dried at 300°C for 1 minute, followed by baking under the conditions at 850°C for 30 seconds in 100% N$_2$ atmosphere, and then by stress relief annealing under the conditions at 800°C for 2 hours in 100% N$_2$ atmosphere, thereby producing a grain oriented electrical steel sheet having an insulating coating.
Each phosphate used was in the form of a primary phosphate aqueous solution, and the amount thereof in terms of solid content is shown in Table 2 below.
For colloidal silicas, following commercially available products were used.

- AT-300s (mean particle diameter: 8.5 nm, manufactured by ADEKA Corporation)
- AT-30 (mean particle diameter: 14.1 nm, manufactured by ADEKA Corporation)
- AT-50 (mean particle diameter: 26.1 nm, manufactured by ADEKA Corporation)
- SNOWTEX XS (mean particle diameter: 4.0 nm, manufactured by Nissan Chemical Industries, Ltd.)
- SNOWTEX 50 (mean particle diameter: 22.5 nm, manufactured by Nissan Chemical Industries, Ltd.)
- SNOWTEX 30L (mean particle diameter: 47.4 nm, manufactured by Nissan Chemical Industries, Ltd.)
- SNOWTEX ZL (mean particle diameter: 100 nm, manufactured by Nissan Chemical Industries, Ltd.)
- MP-1040 (mean particle diameter: 130 nm, manufactured by Nissan Chemical Industries, Ltd.)
- MP-4540M out of the scope of the claims, mean particle diameter: 410 nm,

manufactured by Nissan Chemical Industries, Ltd.)

[Table 2]

Examples 3, 11, 13, 14, 17 and 18 do not fall under the scope of the present claims. Their designation as IE in Tables 2 and 3 is erroneous.

[Table 2]

Table 2

| No. | Magnesium phosphate | Calcium phosphate | Barium phosphate | Strontium phosphate | Zinc phosphate | Aluminum phosphate | Manganese phosphate | Total | $r_1$ [nm] | $r_2$ [nm] | $r_3$ [nm] | $r_4$ [nm] | $w_1$ [parts by mass] | $w_2$ [parts by mass] | $w_3$ [parts by mass] | $w_4$ [parts by mass] | $w_1$~$w_4$ total [parts by mass] | $r_2/r_1$ | $r_3/r_2$ | $r_4/r_3$ | $w_2/(w_1+w_2)$ | $w_3/(w_2+w_3)$ | $w_4/(w_3+w_4)$ | Remarks |
|---|---|---|---|---|---|---|---|---|---|---|---|---|---|---|---|---|---|---|---|---|---|---|---|---|
| | Phosphate [parts by mass] (in terms of solid content) | | | | | | | | Colloidal silica | | | | | | | | | | | | | | | |
| 1 | 100 | | | | | | | 100 | 8.5 | | | | 80 | | | | 80 | — | | | — | | | CE |
| 2 | 100 | | | | | | | 100 | 8.5 | 14.1 | | | 20 | 20 | | | 40 | 1.7 | | | 0.50 | | | CE |
| 3 | 100 | | | | | | | 100 | 8.5 | 14.1 | | | 60 | 60 | | | 120 | 1.7 | | | 0.50 | | | IE |
| 4 | 100 | | | | | | | 100 | 8.5 | 14.1 | | | 70 | 70 | | | 140 | 1.7 | | | 0.50 | | | CE |
| 5 | 70 | | | | | | 30 | 100 | 8.5 | 26.1 | | | 15 | 45 | | | 60 | 3.1 | | | 0.75 | | | IE |
| 6 | 80 | 20 | | | | | | 100 | 8.5 | 47.4 | | | 20 | 60 | | | 80 | 5.6 | | | 0.75 | | | IE |
| 7 | 100 | | | | | | | 100 | 8.5 | 410 | | | 10 | 30 | | | 40 | 48.2 | | | 0.75 | | | CE |
| 8 | 100 | | | | | | | 100 | 4.0 | 130 | | | 20 | 40 | | | 60 | 32.5 | | | 0.67 | | | IE |
| 9 | 50 | | | | | 50 | | 100 | 100 | 130 | | | 30 | 40 | | | 70 | 1.3 | | | 0.57 | | | CE |
| 10 | 50 | | | 50 | | | | 100 | 22.5 | 26.1 | | | 60 | 10 | | | 70 | 1.2 | | | 0.14 | | | CE |
| 11 | 100 | | | | | | | 100 | 4.0 | 410 | | | 20 | 100 | | | 120 | 102.5 | | | 0.83 | | | IE |
| 12 | 100 | | | | | | | 100 | 14.1 | 47.4 | | | 20 | 60 | | | 80 | 3.4 | | | 0.75 | | | IE |
| 13 | 100 | | | | | | | 100 | 14.1 | 47.4 | | | 10 | 70 | | | 80 | 3.4 | | | 0.88 | | | IE |
| 14 | | | | | | 100 | | 100 | 14.1 | 47.4 | | | 70 | 30 | | | 100 | 3.4 | | | 0.30 | | | IE |
| 15 | 60 | | | | | 40 | | 100 | 14.1 | 47.4 | | | 5 | 75 | | | 80 | 3.4 | | | 0.94 | | | CE |
| 16 | 100 | | | | | | | 100 | 14.1 | 47.4 | | | 60 | 20 | | | 80 | 3.4 | | | 0.25 | | | CE |
| 17 | 100 | | | | | | | 100 | 8.5 | 14.1 | 22.5 | | 20 | 20 | 20 | | 60 | 1.7 | 1.6 | | 0.50 | 0.50 | | IE |
| 18 | | 30 | | | | | 70 | 100 | 8.5 | 14.1 | 22.5 | | 20 | 20 | 40 | | 80 | 1.7 | 1.6 | | 0.50 | 0.67 | | IE |
| 19 | | | | | 100 | | | 100 | 4.0 | 22.5 | 47.4 | 100 | 5 | 10 | 20 | 40 | 75 | 5.6 | 2.1 | 2.1 | 0.67 | 0.67 | 0.67 | IE |
| 20 | 100 | | | | | | | 100 | 26.1 | 100 | | | 20 | 60 | | | 80 | 3.8 | | | 0.75 | | | IE |
| 21 | 50 | | | | | 50 | | 100 | 47.4 | 100 | 410 | | 20 | 20 | 20 | | 60 | 2.1 | 4.1 | | 0.50 | 0.50 | | IE |

$w_1$, $w_2$, $w_3$, $w_4$: Parts by mass (in terms of solid content) with respect to 100 parts by mass of a phosphate in terms of solid content

CE: Comparative Example

IE: Inventive Example

EP 3 346 025 B1

Properties of each grain oriented electrical steel sheet having an insulating coating thus obtained were evaluated. The results are shown in Table 3 below. The properties were evaluated as follows.

- Exerted tension: Taking the tension in a rolling direction as the exerted tension, it was calculated from deflection of a steel sheet after an insulating coating on either side was peeled with alkali, acid or the like, using Formula (1):

$$\text{Tension exerted on steel sheet [MPa]} = \text{Young's modulus of steel sheet [GPa]} \times \text{Sheet thickness [mm]} \times \text{Deflection [mm]} / (\text{Deflection measurement length [mm]})^2 \times 10^3 \ldots \text{Formula (1)}$$

where Young's modulus of a steel sheet was set to 132 GPa.
- $W_{17/50}(R)$: Iron loss [W/kg] before application of a treatment solution
- Post-application $\Delta W = W_{17/50}(C) - W_{17/50}(R)$ ($W_{17/50}(C)$: Iron loss [W/kg] after baking of an insulating coating)
- Post-stress relief annealing $\Delta W = W_{17/50}(A) - W_{17/50}(R)$ ($W_{17/50}(A)$: Iron loss [W/kg] after stress relief annealing)
- Phosphorus dissolution amount: Measured after baking of an insulating coating

[Table 3]

Table 3

| No. | Exerted tension [MPa] | $W_{17/50}$ (R) [W/kg] | Post-application $\Delta W$ [W/kg] | Post-stress relief annealing $\Delta W$ [W/kg] | Phosphorus dissolution amount [μg/150cm$^2$] | Remarks |
|---|---|---|---|---|---|---|
| 1 | 10.8 | | -0.027 | -0.027 | 3050 | CE |
| 2 | 8.2 | | -0.01 8 | -0.017 | 1025 | CE |
| 3 | 12.5 | | -0.032 | -0.031 | 83 | IE |
| 4 | 7.5 | | -0.016 | -0.016 | 2023 | CE |
| 5 | 12.5 | | -0.033 | -0.032 | 75 | IE |
| 6 | 12.6 | | -0.033 | -0.033 | 72 | IE |
| 7 | 8.5 | | -0.017 | -0.017 | 1130 | CE |
| 8 | 12.5 | | -0.032 | -0.033 | 78 | IE |
| 9 | 10.3 | | -0.025 | -0.024 | 2250 | CE |
| 10 | 10.7 | | -0.028 | -0.029 | 2263 | CE |
| 11 | 13.1 | 0.900 | -0.035 | -0.036 | 92 | IE |
| 12 | 12.6 | | -0.031 | -0.031 | 75 | IE |
| 13 | 12.5 | | -0.031 | -0.035 | 73 | IE |
| 14 | 12.1 | | -0.030 | -0.030 | 103 | IE |
| 15 | 11.3 | | -0.029 | -0.028 | 160 | CE |
| 16 | 11.1 | | -0.029 | -0.029 | 155 | CE |
| 17 | 12.6 | | -0.033 | -0.030 | 70 | IE |
| 18 | 12.7 | | -0.032 | -0.030 | 76 | IE |
| 19 | 13.5 | | -0.036 | -0.035 | 69 | IE |

(continued)

| No. | Exerted tension [MPa] | W$_{17/50}$ (R) [W/kg] | Post-application $\Delta$W [W/kg] | Post-stress relief annealing $\Delta$W [W/kg] | Phosphorus dissolution amount [$\mu$g/150cm$^2$] | Remarks |
|---|---|---|---|---|---|---|
| 20 | 12.6 | | -0.030 | -0.030 | 74 | IE |
| 21 | 12.7 | | -0.031 | -0.031 | 72 | IE |
| CE: Comparative Example IE: Inventive Example | | | | | | |

Examples 3, 11, 13, 14, 17 and 18 are not inventive examples. As is clear from the results shown in Tables 2 and 3 above, in Inventive Examples in each of which the colloidal silica content in terms of $SiO_2$ solid content was within the range of 50 to 120 parts by mass with respect to 100 parts by mass of the phosphate, the particle diameter ratio was 1.9, and the mass ratio was within the range of 0.50 to 0.80, higher tension was exerted on the relevant steel sheet and an iron loss reducing effect was more excellent as compared to Comparative Examples in each of which at least one of the above conditions was not satisfied. In addition, water resistance was also excellent.

[Experimental Example 2]

A grain oriented electrical steel sheet with a sheet thickness of 0.23 mm (magnetic flux density B$_8$: 1.912 T) that had undergone finishing annealing was prepared. The grain oriented electrical steel sheet was cut into a size of 100 mm x 300 mm and pickled with 5 mass% phosphoric acid. Thereafter, an insulating coating treatment solution prepared at the composition shown in Table 4 below was applied so that the total coating amount on both surfaces after drying and baking became 15 g/m$^2$. Subsequently, the resulting steel sheet was placed in a drying furnace and dried at 300°C for 1 minute, followed by baking under the conditions at 950°C for 10 seconds in 100% N$_2$ atmosphere, and then by stress relief annealing under the conditions at 800°C for 2 hours in 100% N$_2$ atmosphere, thereby producing a grain oriented electrical steel sheet having an insulating coating.

None of the samples 1-20 of Tables 4 and 5 below fall under the scope of the claims, because sample Nos. 13 and 14 of claim are not inventive. The insulating coating treatment solutions of Nos. 1 to 13 shown in Table 4 below were prepared by using the composition of No. 13 shown in Table 2 of [Experimental Example 1] above as the basic composition and adding an M compound(s) thereto.

Likewise, the insulating coating treatment solutions of Nos. 14 to 20 shown in Table 4 below were prepared by using the composition of No. 14 shown in Table 2 of [Experimental Example 1] above as the basic composition and adding an M compound(s) thereto.

For the M compounds, a $TiO_2$ sol, $NH_4VO_3$, $CrO_3$, $MnCO_3$, a $FeO(OH)$ sol, and a $ZrO_2$ sol were used as the Ti compound, the V compound, the Cr compound, the Mn compound, the Fe compound, and the Zr compound, respectively.

[Table 4]

EP 3 346 025 B1

Table 4

| No. | Phosphate [parts by mass] (in terms of solid content) | | Colloidal silica | | | | | | | M compound [parts by mass] | | | | | | Total |
|---|---|---|---|---|---|---|---|---|---|---|---|---|---|---|---|---|
| | Magnesium phosphate | Aluminum phosphate | $r_1$ [nm] | $r_2$ [nm] | $w_1$ [parts by mass] | $w_2$ [parts by mass] | $w_1+w_2$ total [parts by mass] | $r_2/r_1$ | $w_2/(w_1+w_2)$ | Ti In terms of $TiO_2$ | V In terms of $V_2O_5$ | Cr In terms of $CrO_3$ | Mn In terms of $MnO$ | Fe In terms of $FeO$ | Zr In terms of $ZrO_2$ | |
| 1 | 100 | | 14.1 | 47.4 | 10 | 70 | 80 | 3.36 | 0.88 | | | 10 | | | | 10 |
| 2 | 100 | | 14.1 | 47.4 | 10 | 70 | 80 | 3.36 | 0.88 | 5 | | | | | | 5 |
| 3 | 100 | | 14.1 | 47.4 | 10 | 70 | 80 | 3.36 | 0.88 | 20 | | | | | | 20 |
| 4 | 100 | | 14.1 | 47.4 | 10 | 70 | 80 | 3.36 | 0.88 | 40 | | | | | | 40 |
| 5 | 100 | | 14.1 | 47.4 | 10 | 70 | 80 | 3.36 | 0.88 | | 20 | | | | | 20 |
| 6 | 100 | | 14.1 | 47.4 | 10 | 70 | 80 | 3.36 | 0.88 | | | 20 | | | | 20 |
| 7 | 100 | | 14.1 | 47.4 | 10 | 70 | 80 | 3.36 | 0.88 | | | | 20 | | | **20** |
| 8 | 100 | | 14.1 | 47.4 | 10 | 70 | 80 | 3.36 | 0.88 | | | | | 20 | | 20 |
| 9 | 100 | | 14.1 | 47.4 | 10 | 70 | 80 | 3.36 | 0.88 | | | | | | 20 | 20 |
| 10 | 100 | | 14.1 | 47.4 | 10 | 70 | 80 | 3.36 | 0.88 | | | 10 | | | 30 | 40 |
| 11 | 100 | | 14.1 | 47.4 | 10 | 70 | 80 | 3.36 | 0.88 | | | | | 50 | | 50 |
| 12 | 100 | | 14.1 | 47.4 | 10 | 70 | 80 | 3.36 | 0.88 | | | | | | 50 | 50 |
| 13 | 100 | | 14.1 | 47.4 | 10 | 70 | 80 | 3.36 | 0.88 | 5 | | | | | 5 | 10 |
| 14 | | 100 | 14.1 | 47.4 | 70 | 30 | 100 | 3.36 | 0.30 | 10 | 25 | | | | | 35 |
| 15 | | 100 | 14.1 | 47.4 | 70 | 30 | 100 | 3.36 | 0.30 | 60 | | | | | | 60 |
| 16 | | 100 | 14.1 | 47.4 | 70 | 30 | 100 | 3.36 | 0.30 | | | 30 | | | | 30 |
| 17 | | 100 | 14.1 | 47.4 | 70 | 30 | 100 | 3.36 | 0.30 | 5 | | 30 | | | | 35 |
| 18 | | 100 | 14.1 | 47.4 | 70 | 30 | 100 | 3.36 | 0.30 | | 10 | | 10 | | | 20 |
| 19 | | 100 | 14.1 | 47.4 | 70 | 30 | 100 | 3.36 | 0.30 | | | | | 15 | 10 | 25 |

| No. | Phosphate [parts by mass] (in terms of solid content) | | Colloidal silica | | | | | | | M compound [parts by mass] | | | | | | Total |
|---|---|---|---|---|---|---|---|---|---|---|---|---|---|---|---|---|
| | Magnesium phosphate | Aluminum phosphate | $r_1$ [nm] | $r_2$ [nm] | $w_1$ [parts by mass] | $w_2$ [parts by mass] | $w_1+w_2$ total [parts by mass] | $r_2/r_1$ | $w_2/(w_1+w_2)$ | Ti In terms of $TiO_2$ | V In terms of $V_2O_5$ | Cr In terms of $CrO_3$ | Mn In terms of MnO | Fe In terms of FeO | Zr In terms of $ZrO_2$ | |
| 20 | | 100 | 14.1 | 47.4 | 70 | 30 | 100 | 3.36 | 0.30 | 10 | | | | | 15 | 25 |
| $w_1$, $w_2$: Parts by mass (in terms of solid content) with respect to 100 parts by mass of a phosphate in terms or solid content | | | | | | | | | | | | | | | | |

Properties of each grain oriented electrical steel sheet having an insulating coating thus obtained were evaluated. The results are shown in Table 5 below. The properties were evaluated as follows.

- Exerted tension: Taking the tension in a rolling direction as the exerted tension, it was calculated from deflection of a steel sheet after an insulating coating on either side was peeled with alkali, acid or the like, using Formula (1):

$$\text{Tension exerted on steel sheet [MPa] = Young's}$$
$$\text{modulus of steel sheet [GPa] x Sheet thickness [mm] x}$$
$$\text{Deflection [mm] / (Deflection measurement length [mm])}^2 \text{ x}$$
$$10^3 \text{ ... Formula (1)}$$

where Young's modulus of a steel sheet was set to 132 GPa.
- $W_{17/50}(R)$: Iron loss [W/kg] before application of a treatment solution
- Post-application $\Delta W = W_{17/50}(C) - W_{17/50}(R)$ ($W_{17/50}(C)$: Iron loss [W/kg] after baking of an insulating coating)
- Post-stress relief annealing $\Delta W = W_{17/50}(A) - W_{17/50}(R)$ ($W_{17/50}(A)$: Iron loss [W/kg] after stress relief annealing)
- Phosphorus dissolution amount: Measured after baking of an insulating coating

[Table 5]

Table 5

| No. | Exerted tension [MPa] | $W_{17/50}$ (R) [W/kg] | Post-application $\Delta W$ [W/kg] | Post-stress relief annealing $\Delta W$ [W/kg] | Phosphorus dissolution amount [$\mu$g/ 150cm$^2$] |
|---|---|---|---|---|---|
| 1 | 23.3 | | -0.031 | -0.035 | 10 |
| 2 | 24.3 | | -0.031 | -0.035 | 20 |
| 3 | 25.1 | | -0.031 | -0.035 | 10 |
| 4 | 25.1 | | -0.031 | -0.035 | 5 |
| 5 | 24.8 | | -0.031 | -0.035 | 15 |
| 6 | 25.4 | | -0.031 | -0.035 | 6 |
| 7 | 24.2 | | -0.031 | -0.035 | 12 |
| 8 | 24.3 | | -0.031 | -0.035 | 11 |
| 9 | 24.6 | | -0.031 | -0.035 | 6 |
| 10 | 25.6 | | -0.031 | -0.035 | 5 |
| 11 | 15.6 | 0.840 | -0.026 | -0.026 | 554 |
| 12 | 15.3 | | -0.025 | -0.026 | 735 |
| 13 | 23.3 | | -0.031 | -0.035 | 12 |
| 14 | 24.3 | | -0.030 | -0.030 | 11 |
| 15 | 14.8 | | -0.023 | -0.023 | 653 |
| 16 | 24.9 | | -0.030 | -0.030 | 6 |
| 17 | 25.2 | | -0.030 | -0.030 | 5 |
| 18 | 24.2 | | -0.030 | -0.030 | 15 |
| 19 | 24.9 | | -0.030 | -0.030 | 8 |

(continued)

| No. | Exerted tension [MPa] | $W_{17/50}$ (R) [W/kg] | Post-application $\triangle W$ [W/kg] | Post-stress relief annealing $\triangle W$ [W/kg] | Phosphorus dissolution amount [$\mu$g/ 150cm$^2$] |
|---|---|---|---|---|---|
| 20 | 25.1 | | -0.030 | -0.030 | 7 |

As is clear from the results shown in Tables 4 and 5 above, it was revealed that by blending the M compound(s) in an amount of 5 to 40 parts by mass (in terms of oxide) with respect to 100 parts by mass of the phosphate, water resistance remarkably improved.

[Experimental Example 3]

In order to confirm that the insulating coating obtained from the treatment solution of the invention is applicable to steel sheets other than a grain oriented electrical steel sheet having a forsterite coating (a grain oriented electrical steel sheet having undergone finishing annealing), five types of metals A to E below were prepared as materials to be subjected to insulation treatment.

- A: Grain oriented electrical steel sheet having no forsterite coating
  A grain oriented electrical steel sheet with a sheet thickness of 0.23 mm (magnetic flux density $B_8$: 1.912 T) that had undergone finishing annealing was prepared. After a forsterite coating formed on a surface of this grain oriented electrical steel sheet was removed using HCl-HF mixed acid at 90°C, the steel sheet was chemically polished using $H_2O_2$-HF mixed acid having been cooled to 10°C to thereby mirror-finish the surface.
- B: Non-oriented electrical steel sheet
  35JNE300 manufactured by JFE Steel Corporation was prepared without provision of an insulating coating.
- C: Stainless steel sheet
  JFE430XT ferritic stainless steel, thickness: 0.5 mm, manufactured by JFE Steel Corporation
- D: Cold-rolled steel sheet
  JFE-CC equivalent to SPCC, thickness: 0.5 mm, manufactured by JFE Steel Corporation
- E: Aluminum
  JIS H 4000 A5052P, thickness: 0.5 mm

The surfaces of each of the above five types of metals were applied with the insulating coating treatment solutions of Nos. 1, 3, 5, 13, 14 and 19 shown in Table 2 and Nos. 6 and 20 shown in Table 4 so that the total coating amount of each treatment solution on both surfaces after drying and baking became 4 g/m$^2$. Subsequently, the resulting metal was placed in a drying furnace and dried at 300°C for 1 minute, followed by baking under the conditions at 800°C for 10 seconds in 100% $N_2$ atmosphere, and then by stress relief annealing under the conditions at 800°C for 2 hours in 100% $N_2$ atmosphere, thereby producing a test material comprising the metal having an insulating coating formed on its surface.

Each of the test materials thus obtained was evaluated for an insulating property of the insulating coating and an adhesion property between the insulating coating and the metal. The results are shown in Table 6 below. The properties were evaluated as follows.

- Insulating property: A current value (Franklin current value) was measured in accordance with the measurement method of surface resistance stated in JIS C 2550-4. When the measured current value is not higher than 0.2 A, the insulating property can be rated as excellent.
- Adhesion property: The adhesion property was evaluated by the cross cut test of JIS K 5600-5-6. For an adhesive tape, Cellotape (registered trademark) CT-18 (adhesion: 4.01 N/10 mm) was used. Of 2 mm squares formed, the number of peeled squares (peeled number) is stated in Table 6 below. When the peeled number is not more than three, the adhesion property can be rated as excellent.

[Table 6]

Table 6

| No. | Insulating coating treatment solution | Materials to be subjected to insulation treatment | | | | | | | | | | Remarks |
|---|---|---|---|---|---|---|---|---|---|---|---|---|
| | | A | | B | | C | | D | | E | | |
| | | Insulating property [A] | Peeled number [number of squares] | Insulating property [A] | Peeled number [number of squares] | Insulating property [A] | Peeled number [number of squares] | Insulating property [A] | Peeled number [number of squares] | Insulating property [A] | Peeled number [number of squares] | |
| 1 | Table 2 No.1 | 0.21 | 25 | 0.22 | 20 | 0.23 | 13 | 0.21 | 16 | 0.22 | 12 | CE |
| 2 | Table 2 No.3 | 0.15 | 2 | 0.12 | 1 | 0.12 | 0 | 0.13 | 1 | 0.11 | 0 | IE |
| 3 | Table 2 No.5 | 0.12 | 2 | 0.13 | 1 | 0.12 | 1 | 0.12 | 0 | 0.12 | 1 | IE |
| 4 | Table 2 No.13 | 0.12 | 2 | 0.10 | 1 | 0.11 | 0 | 0.13 | 0 | 0.10 | 0 | IE |
| 5 | Table 2 No.14 | 0.16 | 3 | 0.15 | 1 | 0.14 | 0 | 0.16 | 0 | 0.15 | 0 | IE |
| 6 | Table 2 No.19 | 0.13 | 2 | 0.11 | 1 | 0.12 | 1 | 0.15 | 0 | 0.11 | 0 | IE |
| 7 | Table 4 No.6 | 0.08 | 2 | 0.06 | 0 | 0.07 | 0 | 0.09 | 0 | 0.08 | 0 | IE |
| 8 | Table 4 No20 | 0.07 | 1 | 0.07 | 0 | 1 0.08 | 0 | 0.06 | 0 | 0.06 | 0 | IE |
| CE: Comparative Example IE: Inventive Example | | | | | | | | | | | | |

Only sample Nos. 3 and 6 of Table 6 are inventive examples. Sample Nos. 2, 4, 5, 7 and 8 are erroneously designated as IE; these do not fall under the scope of the claims. As is clear from the results shown in Table 6 above, it was revealed that even when the insulating coating treatment solutions with the colloidal silica content in terms of $SiO_2$ solid content being within the range of 50 to 120 parts by mass with respect to 100 parts by mass of the phosphate, the particle diameter ratio being : 1.9 and the mass ratio being within the range of 0.50 to 0.80, were applied to metals other than a grain oriented electrical steel sheet having a forsterite coating, properties such as an insulating property and an adhesion property were excellent.

## Claims

1. An insulating coating treatment solution for forming an insulating coating on a surface of metal, comprising:

   a phosphate of at least one selected from the group consisting of Mg, Ca, Ba, Sr, Zn, Al and Mn; and two or more types of colloidal silicas having different mean particle diameters,
   wherein a total content of the two or more types of colloidal silicas in terms of $SiO_2$ solid content is 50 to 120 parts by mass with respect to 100 parts by mass of the phosphate in terms of solid content,
   wherein, when each of mean particle diameters of the two or more types of colloidal silicas is defined as $r_1$, ..., $r_n$ in order of increasing size, a mean particle diameter ratio expressed by $r_{i+1}/r_i$ is not less than 1.9,
   wherein, when each of masses of the two or more types of colloidal silicas in terms of $SiO_2$ solid content is defined as $w_1$, ..., ..., $w_n$ in order of increasing mean particle diameter, a mass ratio expressed by $w_{i+1}/(w_{i+1}+w_i)$ is 0.50 to 0.80,
   where n represents an integer of at least 2, and i represents an integer of 1 to (n-1), and
   wherein the each of mean particle diameters of the two or more types of colloidal silicas is 1.0 to 150 nm.

2. The insulating coating treatment solution according to claim 1,
   wherein, when at least one selected from the group consisting of Ti, V, Cr, Mn, Fe and Zr is denoted by M, the insulating coating treatment solution further comprises an M compound, and
   wherein a content of the M compound in terms of oxide is 5 to 40 parts by mass with respect to 100 parts by mass of the phosphate.

3. A method of manufacturing metal having an insulating coating, comprising: applying the insulating coating treatment solution according to claim 1 or 2 onto a surface of metal, followed by baking at a temperature of 800°C to 1000°C for 10 to 300 seconds, thereby obtaining metal having an insulating coating.

4. The method of manufacturing metal having an insulating coating according to claim 3,
   wherein the metal is a steel sheet.

5. The method of manufacturing metal having an insulating coating according to claim 4,
   wherein the steel sheet is an electrical steel sheet.

6. The method of manufacturing metal having an insulating coating according to claim 5,
   wherein the electrical steel sheet is a grain oriented electrical steel sheet having undergone finishing annealing.

## Patentansprüche

1. Lösung für Isolier-Beschichtungsbehandlung zum Ausbilden einer isolierenden Beschichtung auf einer Oberfläche aus Metall, umfassend:

   ein Phosphat wenigstens eines Elementes, das aus der Gruppe ausgewählt wird, die aus Mg, Ca, Ba, Sr, Zn, Al und Mn besteht, sowie zwei oder mehr Arten kolloidaler Siliziumdioxide mit unterschiedlichen mittleren Teilchendurchmessern,
   wobei ein Gesamtgehalt der zwei oder mehr Arten kolloidaler Siliziumdioxide in Hinblick auf den $SiO_2$-Feststoffgehalt, 50 bis 120 Massenteile in Bezug auf 100 Massenteile des Phosphats im Hinblick auf den Feststoffgehalt beträgt,
   wenn jeder der mittleren Teilchendurchmesser der zwei oder mehr Arten kolloidaler Siliziumdioxide als $r_1$, ..., rn in der Reihenfolge zunehmender Größe definiert ist, ein mittleres Teilchendurchmesser-Verhältnis, ausge-

drückt mittels $r_{i+1}/r_i$, nicht weniger als 1,9 beträgt,
wenn jede der Massen der zwei oder mehr Arten kolloidaler Siliziumdioxide in Bezug auf den $SiO_2$-Feststoffgehalt als w1, ..., wn in der Reihenfolge zunehmenden mittleren Teilchendurchmessers definiert ist, ein Massenverhältnis, ausgedrückt mittels $w_{i+1}/(w_{i+1}+w_i)$, 0,50 bis 0,80 beträgt,
wobei n eine ganze Zahl repräsentiert, die wenigstens 2 beträgt, und i eine ganze Zahl von 1 bis (n-1) repräsentiert, und
jeder der mittleren Teilchendurchmesser der zwei oder mehr Arten kolloidaler Siliziumdioxide 1,0 bis 150 nm beträgt.

2. Lösung für Isolier-Beschichtungsbehandlung nach Anspruch 1,
wobei, wenn wenigstens ein Element, das aus der Gruppe ausgewählt wird, die aus Ti, V, Cr, Mn, Fe und Zr besteht, mit M bezeichnet wird, die Lösung für Isolier-Beschichtungsbehandlung des Weiteren eine M-Verbindung enthält, und
ein Gehalt der M-Verbindung in Hinblick auf Oxid 5 bis 40 Massenteile in Bezug auf 100 Massenteile des Phosphats beträgt.

3. Verfahren zum Herstellen von Metall mit einer isolierenden Beschichtung, umfassend: Aufbringen der Lösung für Isolier-Beschichtungsbehandlung nach Anspruch 1 oder 2 auf eine Oberfläche aus Metall, gefolgt von Brennen bei einer Temperatur von 800°C bis 1000°C über 10 bis 300 Sekunden, um so Metall mit einer isolierenden Beschichtung zu gewinnen.

4. Verfahren zum Herstellen von Metall mit einer isolierenden Beschichtung nach Anspruch 3, wobei das Metall ein Stahlblech ist.

5. Verfahren zum Herstellen von Metall mit einer isolierenden Beschichtung nach Anspruch 4, wobei das Stahlblech ein Elektrostahlblech ist.

6. Verfahren zum Herstellen von Metall mit einer isolierenden Beschichtung nach Anspruch 5, wobei das Elektrostahlblech ein kornorientiertes Elektrostahlblech ist, das Fertigglühen unterzogen wurde.


**Revendications**

1. Solution de traitement de revêtement isolant pour former un revêtement isolant sur une surface d'un métal, comprenant :

un phosphate d'au moins un élément choisi parmi le groupe constitué de Mg, Ca, Ba, Sr, Zn, Al et Mn ; et deux ou plus de deux types de silices colloïdales ayant des diamètres moyens de particule différents,
dans laquelle une teneur totale des deux ou plus de deux types de silices colloïdales en termes de teneur en matières solides $SiO_2$ est de 50 à 120 parties en masse par rapport à 100 parties en masse du phosphate en termes de teneur en matières solides, dans laquelle, lorsque chacun des diamètres moyens de particule des deux ou plus de deux types de silices colloïdales est défini par $r_1$, ..., $r_n$ par ordre de taille croissante, un rapport de diamètres moyens de particule exprimé par $r_{i+1}/r_i$ n'est pas inférieur à 1,9,
dans laquelle, lorsque chacune des masses des deux ou plus de deux types de silices colloïdales en termes de teneur en matières solides $SiO_2$ est définie par $w_1$, ..., ..., $w_n$ par ordre de diamètre moyen de particule croissant, un rapport massique exprimé par $w_{i+1}/(w_{i+1}+w_i)$ est de 0,50 à 0,80,
où n représente un nombre entier d'au moins 2, et i représente un nombre entier compris entre 1 et (n-1), et
dans laquelle chacun des diamètres moyens de particule des deux ou plus de deux types de silices colloïdales est de 1,0 à 150 nm.

2. Solution de traitement de revêtement isolant selon la revendication 1,
dans laquelle, lorsqu'au moins un élément choisi parmi le groupe constitué de Ti, V, Cr, Mn, Fe et Zr est désigné par M, la solution de traitement de revêtement isolant comprend en outre un composé M, et
dans laquelle une teneur du composé M en termes d'oxyde est de 5 à 40 parties en masse par rapport à 100 parties en masse du phosphate.

3. Procédé de fabrication d'un métal ayant un revêtement isolant, comprenant : l'application de la solution de traitement de revêtement isolant selon la revendication 1 ou 2 sur une surface de métal, suivie d'une cuisson à une température de 800°C à 1 000°C pendant 10 à 300 secondes, en obtenant ainsi un métal ayant un revêtement isolant.

4. Procédé de fabrication d'un métal ayant un revêtement isolant selon la revendication 3, dans lequel le métal est une tôle d'acier.

5. Procédé de fabrication d'un métal ayant un revêtement isolant selon la revendication 4, dans lequel la tôle d'acier est une tôle d'acier électrique.

6. Procédé de fabrication d'un métal ayant un revêtement isolant selon la revendication 5, dans lequel la tôle d'acier électrique est une tôle d'acier électrique à grains orientés ayant subi un recuit de finition.

# FIG. 1

**EP 3 346 025 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3039484 A
- JP 8277475 A
- JP H0339484 A
- JP H1171683 A